# EUROPÄISCHE PATENTANMELDUNG

(11) **EP 3 971 456 A1**
(43) Veröffentlichungstag der Anmeldung: **23.03.2022**
(21) Anmeldenummer: 21197226.0
(22) Anmeldetag: 16.09.2021
(51) Int. Cl.: F16K 37/00, F16K 31/04, F16K 11/085

(54) **STELLVENTILPOSITIONSERFASSUNG**

(30) Priorität: 21.09.2020 DE 102020124541
(71) Anmelder: WOCO Industrietechnik GmbH, 63628 Bad Soden-Salmünster (DE)
(72) Erfinder: Geißel, Eberhard, 36093 Künzell (DE)
(74) Vertreter: Schmid, Nils T.F.

(57) **Zusammenfassung**

Die vorliegende Erfindung betrifft ein Verfahren zum Erfassen der Stellung eines mittels eines Stellantriebs (11) verstellbaren Stellglieds (15) eines Stellventils (1), bei dem eine stellantriebcharakteristische Betriebsgröße, wie eine Antriebsleistung, eine Antriebsbetätigungskraft und/oder ein Antriebsdrehmoment, kontinuierlich oder diskontinuierlich detektiert wird; und anhand der detektierten stellantriebcharakteristischen Betriebsgröße eine Stellgliedstellung ermittelt wird.

## Beschreibung

Die vorliegende Erfindung betrifft ein Verfahren zum Erfassen der Stellung eines mittels eines Stellantriebs verstellbaren Stellglieds eines Stellventils. Ferner stellt die vorliegende Erfindung eine Stellventilpositionserfassungseinrichtung für ein Stellventil sowie ein Stellventil, insbesondere Wegeventil, zum Einstellen einer Prozessfluidströmung beispielsweise in einem Kraftfahrzeug, bereit.

Gattungsgemäße Mehrwegeventile werden beispielsweise in Kühl- oder Klimakreisläufen von Fahrzeugen zum Verteilen oder Mischen von Fluiden, wie beispielsweise Kühlflüssigkeiten oder Ölen, verwendet. Dabei bewegt ein Antrieb ein Stellglied zwischen mehreren Positionen relativ zu einem Ventilgehäuse und/oder einem Ventilsitz. Es ist im Stand der Technik bereits bekannt, die Position des Stellglieds zu erfassen. Beispielsweise wird die Position des Stellglieds als linearer Abstand zum Ventilsitz oder als Drehwinkel bezüglich des Ventilsitzes mittels Sensoren erfasst.

Ein derartiges Mehrwegeventil für Kühlkreisläufe eines Fahrzeugs ist in EP1529937B1 beschrieben. Das Mehrwegeventil gemäß EP1529937B1 besitzt ein als Drehkolben ausgebildetes Ventilglied, das mittels eines Elektromotors relativ zu seiner Rotationsachse verstellt werden kann, um verschiedene Ventilstellungen zu realisieren. Zur Positionserfassung des Ventilglieds ist ein Hall-Winkelsensor vorgesehen, der einem mehrpoligen Permanentmagneten zugeordnet ist. Bei einer Verstellbewegung des Ventilkolbens registriert der Hall-Winkelsensor eine induzierte Spannung, welche von einer Ventilsteuerung in eine Rotationsstellung des Ventilglieds umgerechnet werden kann.

Hall-Winkelsensoren und die damit zusammenhängende Messsensorik haben sich grundsätzlich bewährt. Insbesondere aufgrund des immer mehr zunehmenden Kostendrucks haben sich jedoch die bei einer derartigen Messeinrichtung auftretenden Kosten sowohl für die Komponenten als solche, als auch für die Herstellung von Stellventilen als nachteilig erwiesen. Ein weiterer Nachteil derartiger Positionssensoren besteht in der indirekten Positionserfassung an einer dem Stellglied zugeordneten Stellstange des Stellantriebs. Ferner tendieren Positionssensoren zum Ausfallen, was zu einer unbemerkten dauerhaften Fehlstellung des Stellventils führen kann.

Es ist die Aufgabe der vorliegenden Erfindung, die Nachteile des Stands der Technik zu überwinden, insbesondere eine zuverlässigere und/oder kostengünstigere Positionserfassung eines Stellventils bereitzustellen.

Diese Aufgabe wird durch die Merkmale der unabhängigen Ansprüche gelöst.

Danach ist ein Verfahren zum Erfassen der Stellung eines mittels eines Stellantriebs, insbesondere eines elektromagnetischen Stellantriebs, verstellbaren Stellglieds eines Stellventils bereitgestellt. Gattungsgemäße Stellventile sind an einen Fluidkreislauf beispielsweise eines Kraftfahrzeugs angeschlossen.

Beispielsweise kann es sich um einen Öl-, Wasser- oder Klimakreislauf eines Kraftfahrzeugs insbesondere im Motorbereich und/oder im Batteriebereich insbesondere bei elektromotorisch betriebenen Kraftfahrzeugen handeln. Das Stellventil dient dazu, Prozessfluide in den Öl-, Wasser-, oder Klimakreisläufen insbesondere von Kraftfahrzeugen einzustellen, insbesondere zu verteilen, zu mischen oder abzusperren. Gattungsgemäße Stellventile werden mittels eines elektromagnetischen Stellantriebs betätigt, um verschiedene Betriebszustände, d.h. Ventilstellungen des Stellglieds realisieren zu können. Bei dem Stellglied kann es sich um einen translatorisch bewegbaren Hubkolben oder um einen relativ zu einer Rotationsstellachse bewegbaren Drehkolben handeln.

Gemäß dem erfindungsgemäßen Verfahren wird eine stellantriebcharakteristische Betriebsgröße kontinuierlich oder diskontinuierlich detektiert. Bei der Betriebsgröße kann es sich beispielsweise um eine Antriebsleistung, eine Antriebsbetätigungskraft und/oder ein Antriebsdrehmoment handeln. Die Betriebsgröße kann während des Betriebs des Stellventils kontinuierlich, also durchgehend, detektiert und beispielsweise aufgezeichnet werden. Alternativ ist es möglich, dass die Betriebsgröße in insbesondere vorbestimmten Intervallen, Taktzeiten oder zu vorbestimmten Stellgliedstellungen die Betriebsgröße detektiert.

Anhand der detektierten stellantriebcharakteristischen Betriebsgröße wird eine Stellgliedstellung ermittelt. Dadurch ist es nicht mehr notwendig, die bislang im Stand der Technik eingesetzten Hall-Sensoren und die damit zusammenhängende Messsensorik zu verbauen, weshalb einerseits die Herstellung erleichtert und andererseits die Kosten reduziert werden können. Die Ermittlung der Stellgliedstellung erfolgt ferner auf direktem Weg. Der Umweg über die indirekte Positionserfassung an einer dem Stellglied zugeordneten Stellstange des Stellantriebs ist nicht mehr notwendig. Insofern ist das erfindungsgemäße Verfahren zum Erfassen der Stellgliedstellung deutlich vereinfacht und genauer als im bislang bekannten Stand der Technik. Ein weiterer Vorteil des erfindungsgemäßen Verfahrens besteht darin, auf die bestehende Elektronik des Stellantriebs und/oder des Stellventils zurückgreifen zu können, ohne dass notwendigerweise zusätzliche Elektronik eingesetzt werden muss. Die Ermittlung der Stellgliedstellung kann beispielsweise dadurch besonders vorteilhaft und einfach erfolgen, dass die Stellantriebcharakteristika bekannt sind. Beispielsweise können die Stellantriebcharakteristika anhand einer Vorab-Initialisierung des Stellventils und/oder des Stellantriebs ermittelt werden.

In einer beispielhaften Ausführung des erfindungsgemäßen Verfahrens wird anhand der detektierten stellantriebcharakteristischen Betriebsgröße eine Stellgliedstellung überwacht und/oder eine Diagnose der Stellgliedstellung durchgeführt. Beispielsweise kann die Überwachung und /Diagnose der Stellgliedstellung in ein Onboard-Diagnose (OBD)-System beispielsweise des Kraftfahrzeugs integriert sein. Beispielsweise kann so das Anfahren von vorbestimmten Soll-Stellventilpositionen überwacht und bewertet werden. Beispielsweise kann eine Abweichung der tatsächlich ermittelten Stellgliedstellung von der Soll-Stellgliedstellung ermittelt, überwacht und/oder bewertet werden. Die Datenkommunikation kann beispielsweise über die sogenannte LIN-Technik erfolgen, wobei zur Diagnose beispielsweise LIN 2.0 Diagnose, wie z. B. Datadump-Service, verwendet werden kann. Beispielsweise kann übermittelt und/oder überwacht werden, ob die Stellgliedstellung um einen insbesondere vorbestimmten Schwellenwert von der Soll-Stellgliedstellung entfernt ist. Dies kann dadurch erfolgen, dass die detektierte stellantriebcharakteristische Betriebsgröße mit einer der Soll-Stellventilgliedstellung zugeordneten Soll-Betriebsgröße verglichen wird und auf Basis des Vergleichs eine Abweichung identifiziert und überwacht wird. Liegt die Abweichung beispielsweise höher als 20 % kann dies auf ein fehlerhaftes Stellventil zurückzuführen sein. Gegebenenfalls können Maßnahmen direkt initialisiert und/oder eingeleitet werden. In einer beispielhaften Weiterbildung erfolgt die Überwachung und/oder Diagnose auf Basis einer Änderung der stellantriebcharakteristischen Betriebsgröße. Beispielsweise ist es möglich anstatt oder zusätzlich zum jeweils aktuellen Ist-Wert eine Änderung der Betriebsgröße zu betrachten. Beispielsweise kann eine untypische Änderung auf ein untypisches Fehlverhalten des Stellventils hinweisen. Beispielsweise kann damit gemeint sein, dass eine Änderung der Stellantriebsgröße um einen zu hohen Betrag oder zu häufig in einem vorbestimmten Zeitintervall erfolgt. Auch diesbezüglich können Schwellwerte festgelegt werden, bei deren Überschreiten auf einen fehlerhaften Stellventil-Betriebszustand zurückgeschlossen werden kann.

In einer weiteren beispielhaften Ausführung des erfindungsgemäßen Verfahrens wird das Stellglied relativ zu einem Ventilgehäuse des Stellventils mittels des Stellantriebs bewegt und bei einer vorbestimmten Stellung des Stellglieds relativ zu dem Ventilgehäuse die stellantriebcharakteristische Betriebsgröße kurzeitig geändert. Die Änderung kann beispielsweise im Wesentlichen reversibel erfolgen. Die kurzzeitige Änderung kann dahingehend zu verstehen sein, dass über einen vorbestimmten Zeitraum im Millisekundenbereich, für den Betrag eines vorbestimmten Stellwinkels bei einem rotatorischen Stellglied oder für eine vorbestimmte axiale Stellbewegung bei einem Hubkolben eine Änderung der Betriebsgröße zu verzeichnen ist. Beispielsweise kann die Änderung der Betriebsgröße erfasst werden und einer Stellgliedstellung zugeordnet werden. Beispielsweise kann über die Erfassung einer Änderung der Betriebsgröße, insbesondere um einen vorbestimmten Betrag und/oder einem vorbestimmten Prozentsatz, in Kenntnis der Stellantriebcharakteristika auf eine Stellgliedstellung zurückgeschlossen werden.

Gemäß einer beispielhaften Weiterbildung des erfindungsgemäßen Verfahrens wird in der vorbestimmten Stellgliedstellung sprunghaft der Reibwiderstand zwischen Stellglied und Stellventilgehäuse erhöht. Insbesondere wird der Reibwiderstand zwischen Stellventil und einem mit dem Stellventil zum Schließen und/oder Öffnen eines Fluidkanals kooperierenden Ventilsitz, der insbesondere einstückig mit dem Stellventilgehäuse ausgebildet ist, erhöht. Die sprunghafte Erhöhung des Reibwiderstands kann sich dadurch auszeichnen, dass die in der vorbestimmten Stellgliedstellung während des erhöhten Reibwiderstands notwendige Stellantriebskraft, Antriebsleistung und/oder das Antriebsdrehmoment deutlich erhöht ist. Beispielsweise kann die notwendige Antriebsleistung, Antriebsbetätigungskraft und/oder Antriebsdrehmoment um mindestens 50 %, insbesondere mindestens 100 %, 150 %, 200 %, 250 % oder wenigstens 300 %, erhöht sein.

Gemäß einem weiteren Aspekt der vorliegenden Erfindung, der mit den vorhergehenden Aspekten und beispielhaften Ausführungen kombinierbar ist, ist eine Stellventilpositionserfassungseinrichtung für ein Stellventil beispielsweise eines Kraftfahrzeugs bereitgestellt.

Das Stellventil weist ein mittels eines insbesondere elektromagnetischen Stellantriebs verstellbares Stellglied auf. Gattungsgemäße Stellventile sind an einen Fluidkreislauf beispielsweise eines Kraftfahrzeugs angeschlossen. Beispielsweise kann es sich um einen Öl-, Wasser- oder Klimakreislauf eines Kraftfahrzeugs insbesondere im Motorbereich und/oder im Batteriebereich insbesondere bei elektromotorisch betriebenen Kraftfahrzeugen handeln. Das Stellventil dient dazu, Prozessfluide in den Öl-, Wasser-, oder Klimakreisläufen insbesondere von Kraftfahrzeugen einzustellen, insbesondere zu verteilen, zu mischen oder abzusperren. Gattungsgemäße Stellventile werden mittels eines elektromagnetischen Stellantriebs betätigt, um verschiedene Betriebszustände, d.h. Ventilstellungen des Stellglieds realisieren zu können. Bei dem Stellglied kann es sich um einen translatorisch bewegbaren Hubkolben oder um einen relativ zu einer Rotationsstellachse bewegbaren Drehkolben handeln.

Die erfindungsgemäße Stellventilpositionserfassungseinrichtung umfasst Elektronik, die dazu eingerichtet ist, anhand einer stellantriebcharakteristischen Betriebsgröße, wie einer Antriebsleistung, einer Antriebsbetätigungskraft und/oder eines Antriebsdrehmoments, eine Position des Stellglieds zu erfassen. Bei der Elektronik, kann es sich beispielsweise um eine Elektronik des Stellantriebs und/oder des Stellventils handeln. Des Weiteren kann die Elektronik mit dem Onboard-DiagnoseSystem des Kraftfahrzeugs gekoppelt sein beziehungsweise in dieses integriert sein. Es ist demnach auch möglich, dass die erfindungsgemäße Stellventilpositionserfassungseinrichtung auf die Elektronik anderer Komponenten, wie des Stellventils oder des Stellantriebs zugreift bzw. zurückgreift, ohne dass weitere Elektronik notwendig ist. Beispielsweise kann die Überwachung und /Diagnose der Stellgliedstellung in ein Onboard-Diagnose (OBD)-System beispielsweise des Kraftfahrzeugs integriert sein. Beispielsweise kann so das Anfahren von vorbestimmten Soll-Stellventilpositionen überwacht und bewertet werden. Beispielsweise kann eine Abweichung der tatsächlich ermittelten Stellgliedstellung von der Soll-Stellgliedstellung ermittelt, überwacht und/oder bewertet werden. Die Datenkommunikation kann beispielsweise über die sogenannte LIN-Technik erfolgen, wobei zur Diagnose beispielsweise LIN 2.0 Diagnose, wie z. B. Datadump-Service, verwendet werden kann. Beispielsweise kann übermittelt und/oder überwacht werden, ob die Stellgliedstellung um einen insbesondere vorbestimmten Schwellenwert von der Soll-Stellgliedstellung entfernt ist. Dies kann dadurch erfolgen, dass die detektierte stellantriebcharakteristische Betriebsgröße mit einer der Soll-Stellventilgliedstellung zugeordneten Soll-Betriebsgröße verglichen wird und auf Basis des Vergleichs eine Abweichung identifiziert und überwacht wird. Liegt die Abweichung beispielsweise höher als 20 % kann dies auf ein fehlerhaftes Stellventil zurückzuführen sein. Gegebenenfalls können Maßnahmen direkt initialisiert und/oder eingeleitet werden. In einer beispielhaften Weiterbildung erfolgt die Überwachung und/oder Diagnose auf Basis einer Änderung der stellantriebcharakteristischen Betriebsgröße. Beispielsweise ist es möglich anstatt oder zusätzlich zum jeweils aktuellen Ist-Wert eine Änderung der Betriebsgröße zu betrachten. Beispielsweise kann eine untypische Änderung auf ein untypisches Fehlverhalten des Stellventils hinweisen. Beispielsweise kann damit gemeint sein, dass eine Änderung der Stellantriebsgröße um einen zu hohen Betrag oder zu häufig in einem vorbestimmten Zeitintervall erfolgt. Auch diesbezüglich können Schwellwerte festgelegt werden, bei deren Überschreiten auf einen fehlerhaften Stellventil-Betriebszustand zurückgeschlossen werden kann.

In einer beispielhaften Ausführung der erfindungsgemäßen Stellventilpositionserfassungseinrichtung umfasst die Stellventilpositionserfassungseinrichtung Mittel, insbesondere vorzugsweise ventilgehäuseseitige Positionserfassungshilfsmittel und/oder vorzugsweise stellgliedseitige Positionserfassungsmittel, die dazu eingerichtet sind, eine kurzzeitige Änderung der stellantriebcharakteristischen Betriebsgröße zu bewirken. Beispielsweise kann die Änderung im Wesentlichen reversibel sein. Die kurzzeitige Änderung kann dahingehend zu verstehen sein, dass über einen vorbestimmten Zeitraum im Millisekundenbereich, für den Betrag eines vorbestimmten Stellwinkels bei einem rotatorischen Stellglied oder für eine vorbestimmte axiale Stellbewegung bei einem Hubkolben eine Änderung der Betriebsgröße zu verzeichnen ist. Beispielsweise kann die Änderung der Betriebsgröße erfasst werden und einer Stellgliedstellung zugeordnet werden. Beispielsweise kann über die Erfassung einer Änderung der Betriebsgröße, insbesondere um einen vorbestimmten Betrag und/oder einem vorbestimmten Prozentsatz, in Kenntnis der Stellantriebcharakteristika auf eine Stellgliedstellung zurückgeschlossen werden. Die Mittel können durch Strukturmerkmale gebildet sein und dem Stellglied und/oder dem Ventilgehäuse, insbesondere einem mit dem Stellglied zum Öffnen und/oder Freigeben eines Fluidkanals des Stellventils zusammenwirkenden Ventilsitz, zugeordnet sein bzw. daran angeordnet sein. Dabei können die Mittel eine vorbestimmte, feste Position an dem Stellglied und/oder dem Stellventilgehäuse insbesondere, dem Ventilsitz, aufweisen.

In einer beispielhaften Weiterbildung der erfindungsgemäßen Stellventilpositionserfassungseinrichtung sind die Mittel dazu in der Lage, eine kurzzeitige Widerstandsspitze gegen eine Relativverlagerung des Stellglieds und des Ventilgehäuses zu generieren, sodass sich die stellantriebcharakteristische Betriebsgröße sprungartig ändert, insbesondere erhöht. Die Mittel können beispielsweise dazu in der Lage sein, eine sprunghafte Erhöhung des Reibwiderstands zu generieren, sodass sich die stellantriebcharakteristische Betriebsgröße sprungartig erhöht. In einer alternativen Ausführung ist es auch denkbar, dass die Mittel dazu ausgelegt sind, eine sprunghafte Verringerung der Betriebsgröße herbeizuführen, insbesondere eine sprunghafte Verringerung des Reibwiderstands. Beispielsweise können lokal, an vorbestimmten, festen Positionen an dem Stellglied und/oder dem Ventilgehäuse, insbesondere dem Ventilsitz, Beschichtungen oder Einsätze verwendet werden, die in Bezug auf Ventilglied, Ventilgehäuse und/oder Ventilsitz einen verringerten Gleitreibungskoeffizienten besitzen. Beim Stellen des Stellglieds mittels des Stellantriebs bringt der Stellantrieb eine bestimmte Antriebsleistung, Antriebsbetätigungskraft und/oder ein Antriebsdrehmoment auf, welche/welches zu einer bestimmten Bewegung, beispielsweise Rotation oder Translation, des Stellglieds führt, um dieses zu stellen und damit die Prozessfluidströmung einzustellen. Wenn sich also die Mittel an einer vorbestimmten Position in Bezug auf das Stellventil befinden und eine kurzzeitige Widerstandspitze, wie eine Erhöhung oder Erniedrigung des Reibwiderstands, erzeugen, ändert sich kurzzeitig, sprungartig eine stellantriebcharakteristische Betriebsgröße, wie die Antriebsleistung, die Antriebsbetätigungskraft und/oder das Antriebsdrehmoment. Diese Änderung kann über die Elektronik, beispielsweise die Stellantriebelektronik detektiert, überwacht, bewertet oder sonst wie verarbeitet werden. Jedenfalls ist es aufgrund der Kenntnis der Position der Mittel und in Kenntnis der Stellantriebcharakteristik über eine vorbestimmte Änderung einer stellantriebcharakteristischen Betriebsgröße möglich, auf die Position des Stellglieds in Bezug auf das Ventilgehäuse, also einen Öffnungs- und/oder Schließgrad des Stellventils, zurückzuschließen.

In einer beispielhaften Weiterbildung der erfindungsgemäßen Stellventilpositionserfassungseinrichtung umfassen die Mittel Positionserfassungshilfsmittel, die an einem einen Fluidkanal begrenzenden Ventilgehäuse angeordnet sind, und Positionserfassungsmittel, die an dem Stellglied, insbesondere drehfest, angeordnet sind. Die Positionserfassungsmittel und die Positionserfassungshilfsmittel wirken derart zusammen, dass die Stellventilpositionserfassungseinrichtung ein Positionssignal generiert. Beispielsweise sind die Positionserfassungshilfsmittel an einem mit dem Stellglied zum Schließen und Öffnen des Fluidkanals kooperierenden Ventilsitz des Ventilgehäuses angeordnet. In einer weiteren beispielhaften Ausführung sind das Positionserfassungshilfsmittel und das Positionserfassungsmittel derart angeordnet und aufeinander abgestimmt, dass sie bei einer vorbestimmten Stellung des Stellglieds relativ zu dem Ventilgehäuse in einen Eingriff miteinander gelangen, wodurch ein die Stellgliedstellung indizierendes Positionssignal von der Stellventilpositionserfassungseinrichtung generiert wird.

Des Weiteren können das Positionserfassungshilfsmittel und das Positionserfassungsmittel dazu ausgelegt sein, bei einer Bewegung des Stellglieds relativ zu dem Ventilgehäuse einen Reibkontakt auszubilden, der eine kurzzeitige Widerstandsspitze entgegen der Relativbewegung bewirkt. Beispielsweise kann eine sprunghafte Erhöhung des Reibwiderstands erzeugt werden. Es ist möglich, dass das Positionserfassungshilfsmittel durch einen von einer Ventilgehäuseinnenseite vorstehenden Vorsprung gebildet ist. Des Weiteren ist es möglich, dass das Positionserfassungsmittel durch einen von einer Stellgliedaußenseite vorstehenden Vorsprung gebildet ist. Dabei ist es möglich, dass das Positionserfassungshilfsmittel aus einem weicheren Material als das Positionserfassungsmittel hergestellt ist. Beispielsweise sind das Positionserfassungshilfsmittel und/oder das Positionserfassungsmittel aus Kunststoff hergestellt.

Es ist auch möglich, dass wenigstens eines von Positionserfassungshilfsmittel und Positionserfassungsmittel so ausgebildet ist, dass statt einer kurzzeitigen Widerstandsspitze, insbesondere einer sprunghaften Erhöhung des Reibwiderstands, eine kurzzeitige, sprunghafte Reduzierung des Reibwiderstands zwischen Stellglied und Ventilgehäuse erreicht wird. Zu diesem Zweck kann wenigstens eines von Positionserfassungshilfsmittel und Positionserfassungsmittel mit einer die Reibung reduzierenden Beschichtung versehen sein oder aus einem Material sehr geringer Gleitreibungskoeffizienten hergestellt sein. Ferner ist es möglich, dass wenigstens zwei, insbesondere drei, vier, fünf oder sechs, entlang einer Bewegungsrichtung des Stellglieds relativ zu dem Ventilgehäuse in einem Abstand zu einander angeordnete Mittel, insbesondere Positionserfassungsmittel, vorgesehen sind. Die mehreren Positionserfassungsmittel können in Umfangsrichtung bezüglich einer Rotationsstellachse bei einem Drehkolben-Stellglied oder in Axialrichtung bezüglich einer Translationsachse bei einem Hubkolben-Stellglied zueinander in einem Abstand zueinander angeordnet sein. Der Abstand zweier benachbarter Positionserfassungsmittel kann einem vorbestimmten Bewegungsinkrement des Stellglieds entsprechen, insbesondere dann, wenn der Stellantrieb einen Schrittmotor aufweist.

In einer weiteren beispielhaften Ausführung der erfindungsgemäßen Stellventilpositionserfassungseinrichtung ist die Elektronik dazu eingerichtet, die Position des Stellglieds zu überwachen und/oder an eine Überwachungselektronik gekoppelt. Beispielsweise kann die Überwachung und /Diagnose der Stellgliedstellung in ein Onboard-Diagnose (OBD)-System beispielsweise des Kraftfahrzeugs integriert sein. Beispielsweise kann so das Anfahren von vorbestimmten Soll-Stellventilpositionen überwacht und bewertet werden. Beispielsweise kann eine Abweichung der tatsächlich ermittelten Stellgliedstellung von der Soll-Stellgliedstellung ermittelt, überwacht und/oder bewertet werden. Die Datenkommunikation kann beispielsweise über die sogenannte LIN-Technik erfolgen, wobei zur Diagnose beispielsweise LIN 2.0 Diagnose, wie z. B. Datadump-Service, verwendet werden kann. Beispielsweise kann übermittelt und/oder überwacht werden, ob die Stellgliedstellung um einen insbesondere vorbestimmten Schwellenwert von der Soll-Stellgliedstellung entfernt ist. Dies kann dadurch erfolgen, dass die detektierte stellantriebcharakteristische Betriebsgröße mit einer der Soll-Stellventilgliedstellung zugeordneten Soll-Betriebsgröße verglichen wird und auf Basis des Vergleichs eine Abweichung identifiziert und überwacht wird. Liegt die Abweichung beispielsweise höher als 20 % kann dies auf ein fehlerhaftes Stellventil zurückzuführen sein. Gegebenenfalls können Maßnahmen direkt initialisiert und/oder eingeleitet werden. In einer beispielhaften Weiterbildung erfolgt die Überwachung und/oder Diagnose auf Basis einer Änderung der stellantriebcharakteristischen Betriebsgröße. Beispielsweise ist es möglich anstatt oder zusätzlich zum jeweils aktuellen Ist-Wert eine Änderung der Betriebsgröße zu betrachten. Beispielsweise kann eine untypische Änderung auf ein untypisches Fehlverhalten des Stellventils hinweisen. Beispielsweise kann damit gemeint sein, dass eine Änderung der Stellantriebsgröße um einen zu hohen Betrag oder zu häufig in einem vorbestimmten Zeitintervall erfolgt. Auch diesbezüglich können Schwellwerte festgelegt werden, bei deren Überschreiten auf einen fehlerhaften Stellventil-Betriebszustand zurückgeschlossen werden kann.

Gemäß einem weiteren Aspekt der vorliegenden Erfindung, der mit den vorhergehenden Ausführungen kombinierbar ist, ist ein Stellventil, insbesondere ein Wegeventil, wie ein 3/2- oder ein 4/2-Wegeventil, zum Einstellen einer Prozessfluidströmung beispielsweise eines Kraftfahrzeugs bereitgestellt. Gattungsgemäße Stellventile sind an einen Fluidkreislauf beispielsweise eines Kraftfahrzeugs angeschlossen. Beispielsweise kann es sich um einen Öl-, Wasser- oder Klimakreislauf eines Kraftfahrzeugs insbesondere im Motorbereich und/oder im Batteriebereich insbesondere bei elektromotorisch betriebenen Kraftfahrzeugen handeln. Das Stellventil dient dazu, Prozessfluide in den Öl-, Wasser-, oder Klimakreisläufen insbesondere von Kraftfahrzeugen einzustellen, insbesondere zu verteilen, zu mischen oder abzusperren. Gattungsgemäße Stellventile werden mittels eines elektromagnetischen Stellantriebs betätigt, um verschiedene Betriebszustände, d.h. Ventilstellungen des Stellglieds realisieren zu können. Bei dem Stellglied kann es sich um einen translatorisch bewegbaren Hubkolben oder um einen relativ zu einer Rotationsstellachse bewegbaren Drehkolben handeln.

Das erfindungsgemäße Stellventil umfasst wenigstens einen Fluidkanal. Der Fluidkanal ist in der Regel von einem Ventilgehäuse begrenzt. Ferner kann der Fluidkanal durch Fluidanschlussstutzen abschnittsweise begrenzt sein, beispielsweise einen Fluideingangsstutzen und einen Fluidausgansstutzen. In Strömungsrichtung betrachtet kann sich zwischen Fluideingangsstutzen und Fluidausgangsstutzen ein sogenannter Ventilraum befinden, in dem ein Verteilen, Mischen, Absperren oder dergleichen der Prozessfluidströmung erfolgen kann.

Das empfindungsgemäße Stellventil umfasst ferner ein Stellglied zum Schließen und zumindest teilweise Öffnen des Fluidkanals. Dabei kann sich das Stellglied in dem Ventilraum befinden. Das Stellglied kann einerseits ein bezüglich einer Rotationsstellachse drehbares Stellglied, ein sogenannter Drehkolben, sein oder andererseits ein entlang einer axialen Translationsstellachse bewegbares Stellglied, ein sogenannter Hubkolben.

Des Weiteren umfasst das Stellventil einen mit dem Stellglied gekoppelten insbesondere elektromagnetischen Stellantrieb zum Aufbringen von Stellkräften. Der Stellantrieb kann Elektronik umfassen. Insbesondere dient der Stellantrieb dazu, eine Antriebsleistung, eine Antriebsbetätigungskraft und/oder ein Antriebsdrehmoment zu erzeugen, um das Stellglied zum Öffnen und Schließen des Fluidkanals zu stellen, bzw. zu bewegen.

Das erfindungsgemäße Stellventil umfasst ferner eine nach einem der zuvor beschriebenen Aspekte bzw. beispielhaften Ausführungen ausgebildete Stellventilpositionserfassungseinrichtung. Dadurch ist ein einfach umzusetzendes Stellventil mit einfach realisierter und präziser Stellventilpositionserfassung geschaffen. Die in Bezug auf das erfindungsgemäße Verfahren bzw. die erfindungsgemäße Stellventilpositionserfassungseinrichtung geschilderten Vorteile ergeben sich in analogerweise für das erfindungsgemäße Stellventil.

In einer beispielhaften Ausführung des erfindungsgemäßen Stellventils umfasst das Stellventil ferner ein den Fluidkanal wenigstens teilweise begrenzendes Ventilgehäuse. An dem Ventilgehäuse ist ein Positionserfassungshilfsmittel angeordnet, das dazu eingerichtet ist, mit einem dem Stellglied zugeordneten, insbesondere an dem Stellglied angeordneten und/oder drehfest mit dem Stellglied verbundenen Positionserfassungsmittel derart zusammenzuwirken, dass die Stellventilpositionserfassungseinrichtung ein Positionssignal generiert. Die Stellventilpositionserfassungseinrichtung kann dazu eingerichtet sein, das Positionssignal dann zu generieren, wenn das Positionserfassungshilfsmittel und das Positionserfassungsmittel einander erfassen, z. B. optisch oder haptisch. Beispielsweise ist das Positionserfassungshilfsmittel an einem mit dem Stellglied zum Schließen und Öffnen des Fluidkanals kooperierenden Ventilsitz angeordnet. Auf diese Weise ist die Zuordnung von Positionserfassungsmittel und Positionserfassungshilfsmittel sichergestellt.

In einer beispielhaften Weiterbildung des erfindungsgemäßen Stellventils sind das Positionserfassungshilfsmittel und das Positionserfassungsmittel derart angeordnet und aufeinander abgestimmt, dass sie bei einer vorbestimmten Stellung des Stellglieds relativ zu dem Ventilgehäuse in einen Eingriff miteinander gelangen, wodurch ein die Stellgliedstellung indizierendes Positionssignal von der Stellventilpositionserfassungseinrichtung generiert wird. Zum miteinander in Eingriff gelangen können das Positionserfassungshilfsmittel und das Positionserfassungsmittel bei der Stellgliedbewegung einander überfahren, aneinander abrutschen, aneinander entlanggleiten, gegeneinander anschlagen oder dergleichen. Mit anderen Worten kann der Eingriff zwischen Positionserfassungshilfsmittel und Positionserfassungsmittel eine vorbestimmte Stellgliedstellung relativ zu dem Ventilgehäuse festlegen.

Gemäß einer beispielhaften Weiterbildung des erfindungsgemäßen Stellventils sind das Positionserfassungshilfsmittel und das Positionserfassungsmittel dazu ausgelegt, bei einer Bewegung, insbesondere Rotation oder Translation, des Stellglieds relativ zu dem Ventilgehäuse einen Reibkontakt auszubilden, der eine kurzzeitige Widerstandsspitze entgegen der Relativbewegung von Stellglied und Ventilgehäuse bewirkt. Beispielsweise kann die Widerstandsspitze eine sprunghafte Erhöhung des Reibwiderstands bewirken. Alternativ kann der Reibkontakt so gestaltet sein, dass kurzzeitig, sprunghafte Reibwiderstände zwischen Stellglied und Ventilgehäuse, insbesondere Ventilsitz reduziert wird. Dies kann beispielsweise durch eine an Positionserfassungshilfsmittel und/oder Positionserfassungsmittel vorgesehener oder bestehender niedrigerer Gleitreibungskoeffizienten realisiert sein.

In einer weiteren beispielhaften Weiterbildung des erfindungsgemäßen Stellventils ist das Positionserfassungshilfsmittel durch einen von der Ventilgehäuseinnenseite vorstehenden Vorsprung, wie eine Noppe oder dergleichen, gebildet und/oder das Positionserfassungsmittel durch einen von einer Stellgliedaußenseite vorstehenden Vorsprung, wie eine Noppe oder dergleichen, gebildet. Die Vorsprünge können separate Bauteile sein und/ oder aus einem Stück mit Ventilgehäuse bzw. Stellglied hergestellt sein. Die Vorsprünge stellen eine konstruktiv einfache Möglichkeit dar, einen Eingriff zwischen ventilgehäuseseitigem Positionserfassungshilfsmittel und stellgliedseitigem Positionserfassungsmittel zu etablieren.

In einer beispielhaften Weiterbildung des erfindungsgemäßen Stellventils kann vorgesehen sein, dass das Positionserfassungshilfsmittel aus einem weicheren Material als das Positionserfassungsmittel hergestellt ist. Beispielsweise kann als Maß für die Weichheit des Materials dessen Elastizitätsmodul herangezogen werden. Im Allgemeinen können die Materialien von Positionserfassungshilfsmittel und Positionserfassungsmittel so gewählt werden, dass zwar die gewünschte kurzzeitige, sprunghafte Änderung der stellantriebscharakteristischen Betriebsgröße erreicht wird, jedoch der Betrieb des Stellglieds nicht beeinträchtigt wird und sich die Positionserfassungshilfsmittel und Positionserfassungsmittel nicht nachteilig auf die Effizienz des Stellantriebs und/oder die Stellgüte des Stellventils auswirken. Beispielsweise können Positionserfassungshilfsmittel und/oder Positionserfassungsmittel aus Kunststoff hergestellt sein.

Gemäß einer weiteren beispielhaften Ausführung des erfindungsgemäßen Stellventils umfasst das Stellventil wenigstens zwei, insbesondere drei, vier, fünf oder sechs, entlang einer Bewegungsrichtung des Stellglieds relativ zu dem Ventilgehäuse in einem Abstand zueinander angeordnete Positionserfassungsmittel und/oder Positionserfassungshilfsmittel. Die Positionserfassungsmittel und/oder die Positionserfassungshilfsmittel können in Umfangsrichtung bezüglich einer Rotationsachse oder in Axialrichtung bezüglich einer Translationsachse, je nach dem, ob es sich um einen Drehkolben oder um einen Hubkolben handelt, in einem Abstand zu einander angeordnet sein. Beispielsweise ist der Abstand zweier benachbarter Mittel gleichmäßig in Umfangsrichtung beziehungsweise in Axialrichtung verteilt. Der Abstand kann ferner vorbestimmt sein. Des Weiteren ist es möglich, dass der Abstand zweier benachbarter Positionserfassungsmittel bzw. zweier benachbarter Positionserfassungshilfsmittel einem vorbestimmten Bewegungsinkrement des Stellglieds entspricht. Dies kann insbesondere vorteilhaft sein, wenn es sich bei dem Stellantrieb um einen Schrittmotor handelt.

Bevorzugte Ausführungen sind in den Unteransprüchen angegeben.

Im Folgenden werden weitere Eigenschaften, Merkmale und Vorteile der Erfindung mittels Beschreibung bevorzugter Ausführungen der Erfindung anhand der beiliegenden beispielhaften Zeichnungen deutlich, in denen zeigen:
- Figur 1: eine schematische Schnittansicht eines erfindungsgemäßen Stellventils;
- Figur 2: ein schematisches Diagramm zur Erläuterung der Funktionsweise der vorliegenden Erfindung;
- Figur 3: eine schematische Schnittansicht einer beispielhaften Ausführung eines erfindungsgemäßen Stellventils in einer ersten Stellgliedstellung; und
- Figur 4: das Stellglied gemäß Figur 3 in einer zweiten Stellgliedstellung.

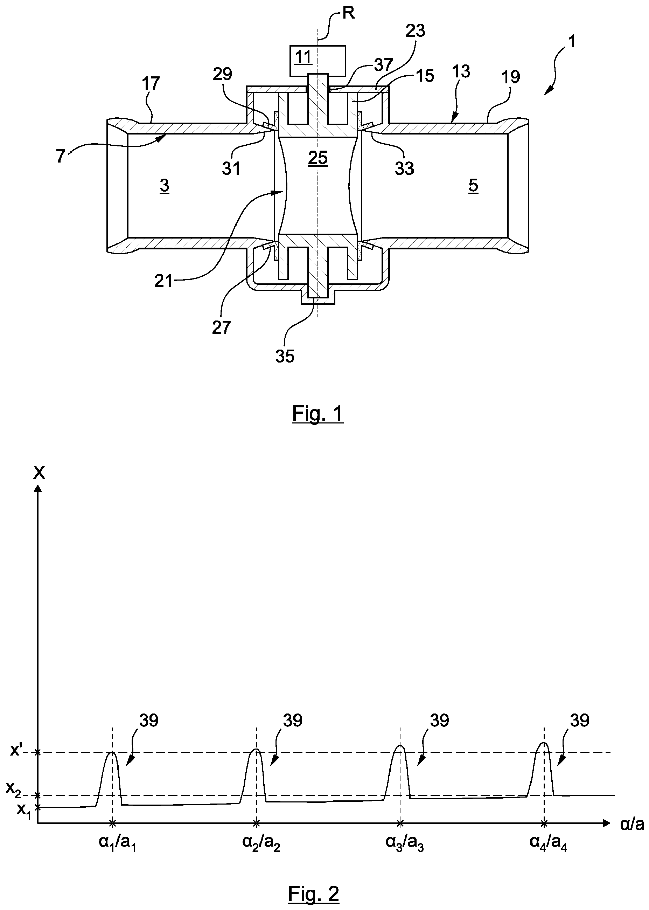

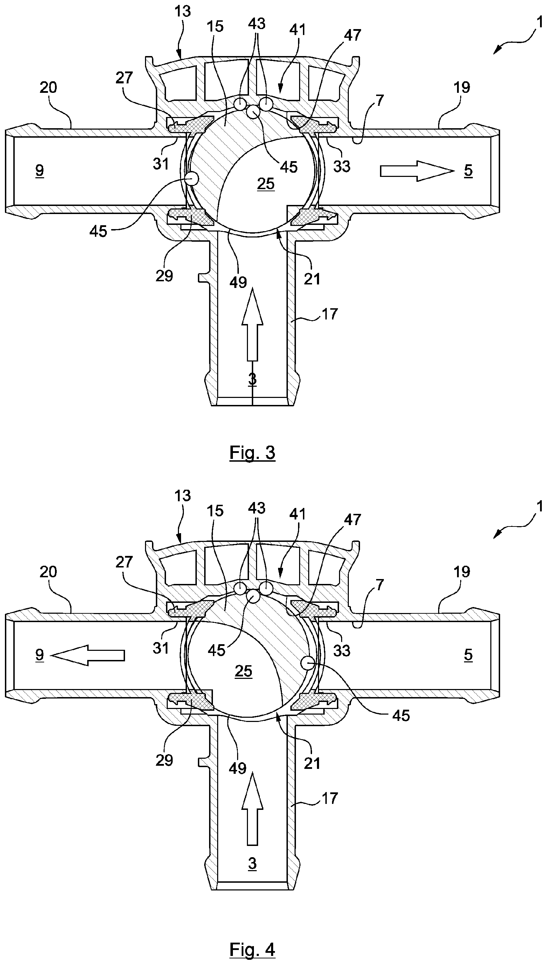

In der vorliegenden Beschreibung beispielhafter Ausführungen der vorliegenden Erfindung anhand der beiliegenden Figuren ist ein erfindungsgemäßes Stellventil zum Einstellen einer Prozessfluidströmung beispielweise eines Kraftfahrzeugs im Allgemeinen mit der Bezugsziffer 1 versehen. Gattungsgemäße Stellventile 1 werden beispielsweise zum Thermomanagement in Kraftfahrzeugen eingesetzt und dienen beispielsweise dazu, Prozessfluide, wie Öle, Wasser und/oder Kühlmittel, zu verteilen, zu mischen und/oder abzusperren. Bei dem in Figur 1 dargestellten Stellventil 1 kann es sich beispielsweise um ein Absperrventil 1 mit einem Fluideingang 3 in einem Fluidausgang 5 oder um ein Wegeventil, insbesondere ein Mehrwegeventil, wie ein 3/2 oder 4/3-Mehrwegeventil, handeln, bei dem nur ein Fluidkanal 7 dargestellt ist. Bei dem in den Figuren 3 und 4 abgebildeten erfindungsgemäßen Stellventil 1 handelt es sich beispielsweise um ein 3/2-Mehrwegventil mit einem Fluideingang 3 und zwei Fluidausgängen 5, 9.

Mittels des Stellventils 1, dass auch als Fluidventil 1 bezeichnet werden kann, können Fluidströmungen verteilt, gemischt, abgesperrt und/oder eingestellt werden, beispielsweise um das Thermomanagement des Kraftfahrzeugs zu realisieren.

Grundsätzlich umfasst ein erfindungsgemäßes Stellventil 1 im Wesentlichen die folgenden Hauptkomponenten: einen insbesondere elektromagnetischen Stellantrieb 11 zum Aufbringen von Stellkräften; wenigstens einen Fluidkanal 7, der durch ein Ventilgehäuse 13 begrenzt ist; ein Stellglied 15 zum Schließen und wenigstens teilweise Öffnen des Fluidkanals 7; und eine erfindungsgemäße Stellventilpositionserfassungseinrichtung, auf die näher in Bezug auf die Figuren 2 bis 4 eingegangen wird.

Das Ventilgehäuse 13 umfasst einen den Fluideingang 3 definierenden Fluideintrittsstutzen 17 und einen den Fluidausgang 5 definierenden Fluidaustrittsstutzen 19 zum Anschließen an ein Leitungssystem, beispielsweise eines Kraftfahrzeugs, wie eines Kühl-, Öl- oder Heizungssystems. Die Stutzen 17, 19 sind als hohle, zylindrische Rohrabschnitte ausgebildet und erstrecken sich entlang einer gemeinsamen Längsachse. In Strömungsrichtung betrachtet befindet sich zwischen dem Fluideintrittsstutzen 17 und dem Fluidaustrittsstutzen 19 ein Ventilraum 21, der denjenigen Bereich im Inneren des Ventilgehäuses 13 ausmacht, indem sich das Stellglied 15 bei einer Stellbewegung bewegen kann. Das Ventilgehäuse 13 ist fest und beispielsweise stoffschlüssig mit einem Deckel 23 verschlossen.

Das Stellventil 1 dient beispielsweise dazu, eine über den Fluideintrittsstutzen 17 eintretende Prozessfluidströmung, wie eine Kühlmittelströmung, einzustellen, d.h. ein über den Fluidaustrittsstutzen 19 des Stellventils 1 austretendes Fluidvolumen, insbesondere Kühlmittelvolumen, einzustellen. Beispielsweise kann das Stellventil den vollen Strömungsquerschnitt innerhalb des Ventilraums 21 öffnen, verschließen oder teilweise freigeben, je nach Bedarf oder Einstellung, die beispielsweise durch eine übergeordnete Stellelektronik, wie eine Kraftfahrzeugelektronik, erfolgen kann.

In dem Ventilraum 21 befindet sich das Stellglied 15, das gemäß der Figuren 1 bis 4 als Drehkolben ausgebildet ist und um eine Rotationsachse R, insbesondere Rotationsstellachse, stellbar, insbesondere drehbar, ist, um verschiedene Durchflussszenarien zu realisieren. Das Stellen des Stellglieds 15 erfolgt über den schematisch angedeuteten Stellantrieb 11, der beispielsweise ein elektromagnetischer Stellantrieb ist und/oder Elektronik, insbesondere eine Stell- und/oder Steuerungselektronik aufweist. Das Stellglied 15 weist eine Bohrung 25 auf, die zum Zulassen einer Fluidströmung durch das Stellventil 1 in Bezug auf einen von dem Ventilgehäuse 13 begrenzten Fluidkanal 7 ausgerichtet ist. Der Fluidkanal 7 gemäß Figur 1 wird in der geöffneten Ventilstellung gebildet durch den rohrartigen Fluideintrittsstutzen 17, den rohrartigen Fluidaustrittsstutzen 19 und die Innenbohrung 25 des Stellglieds 15.

Zwischen dem Stellglied 15 und dem Ventilgehäuse 13 kann eine oder mehrere Dichtungen 27, 29 angeordnet sein, um die Dichtigkeit in der Schließstellung sicherzustellen. Beispielsweise sind die Dichtungen 27, 29 im Bereich eines Ventilsitzes 31, 33 des Ventilgehäuses 13 angeordnet, der mit dem Stellglied 15 zum Schließen und insbesondere Öffnen des Fluidkanals 7 zusammenwirkt.

In Figur 1 ist ersichtlich, dass das Drehkolben-Stellglied 15 bezüglich des Ventilgehäuses 13 drehbeweglich gelagert ist, um um die Rotationsachse R rotieren zu können, um verschiedene Durchflussszenarien einzustellen. Über Rotationslager 35, 37, durch die die Rotationsachse R verläuft, ist die drehbewegliche Lagerung realisiert. Vorteilhaft gemäß der Ausführung aus Figur 1 ist, dass, zumindest im geöffneten Ventilgliedzustand, die Rotationslager, insbesondere Radiallager, sich im Fluidbereich befinden und von der Fluidströmung umströmt, bzw. umspült sind, sodass eine zuverlässige, insbesondere permanente, Schmierung der Lagerungen 35, 37 einhergeht. Die Lagerungen 35, 37 sind beispielsweise durch Zapfen-Vertiefungs-Eingriffsstrukturen realisiert.

Bezugnehmend auf die Figuren 2 bis 4 wird die Funktionsweise des erfindungsgemäßen Stellventils 1 in Bezug auf die Positionserfassung sowie die erfindungsgemäße Stellventilpositionserfassungseinrichtung näher erläutert.

In der schematischen Abbildung gemäß Figur 2 ist ein Diagramm zum Verlauf einer stellantriebcharakteristischen Betriebsgröße, die im Allgemeinen mit dem Bezugszeichen X angedeutet ist und beispielsweise eine Antriebsleistung, eine Antriebsbetätigungskraft und/oder ein Antriebsdrehmoment sein kann, auf der y-Achse gegenüber einer Stellbewegung des Stellglieds 15 abgebildet, wobei die Stellbewegung beispielsweise ein Rotationswinkel α für den Fall eines Drehkolben-Stellglieds 15 oder eine Translationsbewegung a im Falle eines Hubkolben-Stellglieds 15 sein kann. Bei einer Stellbewegung des Stellglieds 15, unabhängig davon, ob es sich um ein Drehkolben- oder Hubkolben-Stellglied 15 handelt, bringt der Stellantrieb 11 eine vorbestimmte Stellkraft auf, um das Stellglied 15 in Bewegung zu setzten. Die vorbestimmte Stellkraft kann beispielsweise durch X₁ in dem Diagramm gemäß Figur 2 angedeutet werden, wobei zu X₁ eine Antriebsleistung, eine Antriebsbetätigungskraft und/oder ein Antriebsdrehmoment korrespondieren kann bzw. dargestellt sein kann. Es ist zu erkennen, dass während einer Stellbewegung (in x-Achsenrichtung nach rechts betrachtet) die notwendige Betätigungskraft von dem Stellantrieb 11 sich insbesondere kontinuierlich geringfügig erhöht, angedeutet durch den Wert X₂ bei fortgeschrittener Bewegung entlang der x-Achse, also mit größer werdenden Hubbewegungen a oder Rotationsbewegungen a.

Die erfindungsgemäße Stellventilpositionserfassungseinrichtung beziehungsweise das erfindungsgemäße Stellventil 1 macht sich die Kenntnis der Stellantriebcharakteristika zu nutze. Das erfindungsgemäße Stellventil 1 beziehungsweise die erfindungsgemäße Stellventilpositionserfassungseinrichtung ist dazu in der Lage, anhand der stellantriebcharakteristischen Betriebsgröße X eine Position α oder a des Stellglieds 15 zu ermitteln. Beispielsweise kann zu vorgegebenen Zeitpunkten, also zu vorgegebenen Stellgliedstellungen des Stellglieds 15 in Bezug auf das Ventilgehäuse 13, eine kurzzeitige, insbesondere im Wesentlichen reversible, Änderung der stellantriebcharakteristischen Betriebsgröße X bewirkt werden. Dies ist in dem Funktionsgraph gemäß Figur 2 mittels des Bezugszeichens 39 angedeutet.

Beispielsweise kann die kurzeitige Erhöhung, beispielsweise der notwendigen Antriebsleistung, Antriebsbetätigungskraft und/oder des notwendigen Antriebsdrehmoments zum Stellen des Stellglieds 15 dadurch erreicht werden, dass punktuell, zu einer vorbestimmten Stellgliedstellung ein sprunghaft erhöhter Reibwiderstand erzeugt wird, der entgegen der Bewegung des Stellglieds 15 relativ zu dem Ventilgehäuse 13 wirkt, sodass sich die stellantriebcharakteristische Betriebsgröße X sprungartig ändert, d.h. die notwendige Antriebsleistung, Antriebsbetätigungskraft und/oder das Antriebsdrehmoment kurzzeitig deutlich ansteigt, um ein Weiterverstellen des Stellglieds 15 zu bewirken. Ist der kurzzeitige Reibwiderstand überwunden, fällt die notwendige Antriebsleistung, Antriebsbetätigungskraft und/oder das notwendige Antriebsdrehmoment, angedeutet im Allgemeinen durch die stellantriebcharakteristische Betriebsgröße X, wieder ab.

In Figur 2 sind schematisch vier vorbestimmte Stellgliedstellungen anhand der Bezugszeichen α₁/α₁/, α₂/α_{2,} α₃/α₃, und α₄/α₄ angedeutet, zu denen jeweils eine sprungartige Änderung 39 der stellantriebcharakteristischen Betriebsgröße X hervorgerufen wird. Die Elektronik der Stellventilpositionserfassungseinrichtung, die beispielsweise die Stellantriebselektronik und/oder die Stellventilelektronik sein kann, ist dazu in der Lage, die Änderung der stellantriebcharakteristischen Betriebsgröße zu erfassen und in ein Positionssignal des Stellglieds 15 umzuwandeln. Beispielsweise kann eine Schwelle X' für die stellantriebcharakteristische Betriebsgröße X angedacht sein, die die stellantriebcharakteristische Betriebsgröße X mindestens erreichen muss, so dass ein Positionssignal generiert wird.

Anhand der Figuren 3 und 4 werden zwei verschiedene Stellgliedstellungen 15 eines erfindungsgemäßen Stellventils 1 gezeigt, wobei auf die erfindungsgemäße Stellventilpositionserfassungseinrichtung bezuggenommen wird. Das Mehrwegeventil, insbesondere 3/2-Wegeventil, gemäß den Figuren 3 und 4 umfasst, wie bereits erwähnt, einen Ventileingang 3, gebildet durch den Fluideingangsstutzen 17, und zwei Fluidausgänge 5, 9, gebildet durch die Fluidaustrittsstutzen 19 bzw. 20.

In Figur 3 ist ein Fluidkanal 7 zwischen Fluideingang 3 und Fluidausgang 5 geöffnet, während in Figur 4 ein Fluidkanal 8 zwischen Fluideingang 3 und Fluidausgang 9 geöffnet ist. Um die verschiedenen Durchflussszenarien zu realisieren, wird das Drehkolben-Stellglied 15 um seine Rotationsstellachse R rotiert, sodass das Stellglied 15 den Fluideingang 3 mit dem Fluidausgang 5 fluidisch verbindet, nämlich über eine Ausrichtung einer Innenbohrung 25 für die Prozessfluidfluidströmung des Stellglieds 15, um eine Prozessfluidströmung durch das Stellventil 1 zuzulassen. In Figur 4 ist die Innenbohrung 25 dann so ausgerichtet, dass sie den Fluideingang 3 mit dem Fluidausgang 9 fluidisch verbindet.

Um die kurzzeitige, insbesondere im Wesentlichen reversible Änderung der stellantriebscharakteristischen Betriebsgröße X zu bewirken, weißt die Stellventilpositionserfassungseinrichtung beziehungsweise das Stellventil 1 Mittel 41 auf, die dazu ausgelegt sind, bei einer Stellbewegung des Stellglieds 15 die Änderung der stellantriebcharakteristischen Betriebsgröße X beispielsweise durch eine kurzzeitige Widerstandsspitze zur sprunghaften Erhöhung des Reibwiderstands entgegen der Relativbewegung zwischen Stellglied 15 und Ventilgehäuse 13 zu erzeugen. Die Mittel 41 untergliedern sich gemäß der Figuren 3 und 4 in ventilgehäuseseitige Positionserfassungshilfsmittel 43 und stellgliedseitige Positionserfassungsmittel 45, die derart einander zugeordnet sind, dass in einer vorbestimmten Stellung des Stellglieds 15 bezüglich des Ventilgehäuses 13 diese miteinander in Eingriff gelangen, wodurch ein die Stellgliedstellung indizierendes Positionssignal von der Stellventilpositionserfassungseinrichtung generiert wird.

Beispielsweise sind an einer Ventilgehäuseinnenseite 47 ein Paar Positionserfassungshilfsmittel 43 ortsfest angeordnet. Ferner sind an einer Stellgliedaußenseite 49 zwei Positionserfassungsmittel 45 angeordnet. Die Positionserfassungshilfsmittel 43 und die Positionserfassungsmittel 45 stehen von der Außenseite 49 beziehungsweise der Innenseite 47 vor, sodass beim Stellen bzw. Bewegen des Stellglieds 15 relativ zu dem Ventilgehäuse 13 die Positionserfassungshilfsmittel 45 von den Positionserfassungsmitteln 47 überfahren werden, wodurch sich eine sprunghafte Erhöhung des Reibwiderstands ergibt, die sich in der Änderung der stellantriebcharakteristischen Betriebsgröße X bemerkbar macht; siehe Figur 2. Dabei sind die Positionserfassungsmittel 45 fest, insbesondere drehfest, mit dem Stellglied 15 verbunden. Ein in Umfangsrichtung in Bezug auf die Rotationsstellachse R betrachteter Abstand zwischen den beiden Positionserfassungsmitteln 45 des Stellglieds 15 entspricht dabei einer Winkeldifferenz Δα beispielsweise zwischen α₁ und α₂ gemäß Figur 2. Je nach Rotationsstellung, im Falle eines Drehkolben-Stellglieds 15, bzw. nach axialer Position des Hubkolben-Stellglieds 15, relativ zu dem Ventilgehäuse 13 geraten unterschiedliche Positionserfassungshilfsmittel 43 und Positionserfassungsmittel 45 miteinander in Eingriff, sodass bei unterschiedlichen Winkel- bzw. Translationspositionen des Stellglieds ein die Änderung des stellantriebcharakteristischen Betriebsgröße X bewirkendes Ereignis auftritt, wie beispielsweise ein erhöhter Reibkontakt. Aus dem Vergleich der Figuren 3 und 4 ist ersichtlich, dass in den Figuren 3 und 4 unterschiedliche Positionserfassungsmittel 45 mit den Positionserfassungshilfsmitteln 43 in Kontakt sind.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### 1. BEZUGSZEICHENLISTE

- 1: Stellventil
- 3: Fluideingang
- 5: Fluidausgang
- 7, 8: Fluidkanal
- 9: Fluidausgang
- 11: Stellantrieb
- 13: Ventilgehäuse
- 15: Stellglied
- 17, 19, 20: Fluidstutzen
- 21: Ventilraum
- 23: Deckel
- 25: Bohrung
- 27, 29: Dichtung
- 31, 33: Ventilsitz
- 35,37: Lagerung
- 39: Änderung der stellantriebcharakteristischen Betriebsgröße
- 41: Mittel
- 43: Positionserfassungshilfsmittel
- 45: Positionserfassungsmittel
- 47: Ventilgehäuseinnenseite
- 49: Stellgliedaußenseite

- X: Stellantriebcharakteristische Betriebsgröße
- α: Stellwinkel
- a: Stellweg
- R: Rotationsstellachse

## Patentansprüche

1. Verfahren zum Erfassen der Stellung eines mittels eines Stellantriebs (11) verstellbaren Stellglieds (15) eines Stellventils (1), bei dem:
- eine stellantriebcharakteristische Betriebsgröße (X), wie eine Antriebsleistung, eine Antriebsbetätigungskraft und/oder ein Antriebsdrehmoment, kontinuierlich oder diskontinuierlich detektiert wird; und
- anhand der detektierten stellantriebcharakteristischen Betriebsgröße (X) eine Stellgliedstellung ermittelt wird.

2. Verfahren nach Anspruch 1, bei dem anhand der detektierten stellantriebcharakteristischen Betriebsgröße (X) eine Stellgliedstellung überwacht und/oder eine Diagnose der Stellgliedstellung durchgeführt wird, wobei insbesondere die Überwachung und/oder Diagnose auf Basis einer Änderung der stellantriebcharakteristischen Betriebsgröße (X) erfolgt.

3. Verfahren nach Anspruch 1 oder 2, bei dem das Stellglied (15) relativ zu einem Ventilgehäuse (13) des Stellventils mittels des Stellantriebs (11) bewegt wird und bei einer vorbestimmten Stellung des Stellglieds (15) relativ zu dem Ventilgehäuse (13) die stellantriebcharakteristische Betriebsgröße (X) kurzzeitig, insbesondere im Wesentlichen reversibel, geändert wird, wobei insbesondere die Änderung der Betriebsgröße (X) erfasst wird und einer Stellgliedstellung zugeordnet wird.

4. Verfahren nach Anspruch 3, bei dem in der vorbestimmten Stellgliedstellung sprunghaft der Reibwiderstand zwischen Stellglied (15) und Ventilgehäuse (13) erhöht wird.

5. Stellventilpositionserfassungseinrichtung für ein Stellventil (1) beispielsweise eines Kraftfahrzeugs, wobei das Stellventil (1) ein mittels eines Stellantriebs (11) verstellbares Stellglied (15) aufweist, umfassend Elektronik, die dazu eingerichtet ist, anhand einer stellantriebcharakteristischen Betriebsgröße (X), wie einer Antriebsleistung, einer Antriebsbetätigungskraft und/oder eines Antriebsdrehmoments, eine Position des Stellglieds (15) zu erfassen.

6. Stellventilpositionserfassungseinrichtung nach Anspruch 5, ferner umfassend Mittel, die dazu eingerichtet sind, eine kurzzeitige, insbesondere im Wesentlichen reversible, Änderung der stellantriebcharakteristischen Betriebsgröße (X) zu bewirken.

7. Stellventilpositionserfassungseinrichtung nach Anspruch 6, wobei die Mittel dazu in der Lage sind, eine kurzzeitige Widerstandsspitze gegen eine Relatiwerlagerung des Stellglieds (15) und des Ventilgehäuses, insbesondere eine sprunghafte Erhöhung des Reibwiderstands, zu generieren, sodass sich die stellantriebcharakteristische Betriebsgröße (X) sprungartig ändert, insbesondere erhöht.

8. Stellventilpositionserfassungseinrichtung nach einem der Ansprüche 5 bis 7, wobei die Elektronik dazu eingerichtet ist, die Position des Stellglieds (15) zu überwachen und/oder an eine Überwachungselektronik gekoppelt ist.

9. Stellventil (1), insbesondere Wegeventil, zum Einstellen einer Prozessfluidströmung beispielsweise eines Kraftfahrzeugs, umfassend:
- wenigstens einen Fluidkanal (7, 8);
- ein Stellglied (15) zum Schließen und zumindest teilweise Öffnen des Fluidkanals;
- einen mit dem Stellglied (15) gekoppelten Stellantrieb (11) zum Aufbringen von Stellkräften; und
- eine nach einem der Ansprüche 5 bis 8 ausgebildete Stellventilpositionserfassungseinrichtung.

10. Stellventil (1) nach Anspruch 9, ferner umfassend ein den Fluidkanal (7, 8) wenigstens teilweise begrenzendes Ventilgehäuse (13), an dem ein Positionserfassungshilfsmittel (43) angeordnet ist, das dazu eingerichtet ist, mit einem dem Stellglied (15) zugeordneten, insbesondere drehfest mit dem Stellglied (15) verbundenen, Positionserfassungsmittel (45) derart zusammenzuwirken, dass die Stellventilpositionserfassungseinrichtung ein Positionssignal generiert, wobei insbesondere das Positionserfassungshilfsmittel (43) an einem mit dem Stellglied (15) zum Schließen und Öffnen des Fluidkanals (7, 8) kooperierenden Ventilsitz angeordnet ist.

11. Stellventil (1) nach Anspruch 10, wobei das Positionserfassungshilfsmittel (43) und das Positionserfassungsmittel (45) derart angeordnet und aufeinander abgestimmt sind, dass sie bei einer vorbestimmten Stellung des Stellglieds (15) relativ zu dem Ventilgehäuse (13) in einen Eingriff miteinander gelangen, wodurch ein die Stellgliedstellung indizierendes Positionssignal von der Stellventilpositionserfassungseinrichtung generiert wird.

12. Stellventil (1) nach Anspruch 10 oder 11, wobei das Positionserfassungshilfsmittel (43) und das Positionserfassungsmittel (45) dazu ausgelegt sind, bei einer Bewegung des Stellglieds (15) relativ zu dem Ventilgehäuse (13) einen Reibkontakt auszubilden, der eine kurzzeitige Widerstandsspitze entgegen der Relativbewegung, insbesondere eine sprunghafte Erhöhung des Reibwiderstands, bewirkt.

13. Stellventil (1) nach einem der Ansprüche 10 bis 12, wobei das Positionserfassungshilfsmittel (43) durch einen von einer Ventilgehäuseinnenseite vorstehenden Vorsprung gebildet ist und/oder wobei das Positionserfassungsmittel (45) durch einen von einer Stellgliedaußenseite vorstehenden Vorsprung gebildet ist.

14. Stellventil (1) nach einem der Ansprüche 10 bis 13, wobei das Positionserfassungshilfsmittel (43) aus einem weicheren Material als das Positionserfassungsmittel (45) hergestellt ist, wobei insbesondere das Positionserfassungshilfsmittel (43) und/oder das Positionserfassungsmittel (45) aus Kunststoff hergestellt sind.

15. Stellventil (1) nach einem der Ansprüche 10 bis 14, ferner umfassend wenigstens 2, insbesondere 3, 4, 5 oder 6, entlang einer Bewegungsrichtung des Stellglieds (15) relativ zu dem Ventilgehäuse (13) in einem Abstand zueinander angeordnete, insbesondere in Umfangsrichtung bezüglich einer Rotationsachse oder in Axialrichtung bezüglich einer Translationsachse, Positionserfassungsmittel, wobei der Abstand zweier benachbarter Positionserfassungsmittel (45) einem vorbestimmten Bewegungsinkrement des Stellglieds (15) entspricht.
